# EUROPEAN PATENT APPLICATION

(11) **EP 2 963 743 A1**
(43) Date of publication of application: **06.01.2016**
(21) Application number: 15174472.9
(22) Date of filing: 30.06.2015
(51) Int. Cl.: H01S 3/00, B23K 26/00

(54) **LASER PROCESSING APPARATUS**

(30) Priority: 03.07.2014 KR 20140083326
(71) Applicant: Microinspection, Inc., Seoul 153-774 (KR)
(72) Inventor: EUN, Tak, 153-774 Seoul (KR); BYEON, Cheol-woong, 153-774 Seoul (KR); PARK, Young-min, 153-774 Seoul (KR)
(74) Representative: Greenaway, Martin William

(57) **Abstract**

The present disclosure provides a laser processing apparatus. A laser processing apparatus includes a laser generator (10), a laser amplifier (20), a chromatic dispersion tuner (40) and an optical focusing unit (30). The laser generator is configured to generate ultrashort laser pulses having chirp characteristics by simultaneously generating a plurality of wavelengths. The laser amplifier is configured to amplify the laser generated by the laser generator. The chromatic dispersion tuner is configured to adjust chirp and pulse width of the laser output from the laser amplifier. The optical focusing unit is configured to irradiate a workpiece (70) with the laser after adjusting the depth of focus of the laser with the chirp and the pulse width adjusted by the chromatic dispersion tuner.

## Description

### Field of the Invention

The present disclosure in some embodiments relates to a laser processing apparatus. More particularly, the present disclosure relates to a laser processing apparatus which adjusts the focal positions and focal timing of respective wavelengths of an ultrashort pulse laser having chirp characteristics through chromatic aberration and chromatic dispersion to effectuate the desired long depth of focus, and which enables adjustments of the moving direction and speed of the focal position in accordance with the processing specifications in order to obtain shapes with a high aspect ratio.

### Background of the Invention

The statements in this section merely provide background information related to the present disclosure and may not necessarily constitute prior art.

In general, a laser processing method is known to use an ultraviolet laser for an accurate process of an object structure that requires highly precise structural details.

An excimer laser agitates a mixed gas of rare gas and halogen to emit ultraviolet rays of short pulses (15 to 35 ns). The oscillation energy is as high as 100 mJ/pulse with the pulse rate ranging between 10 and 500Hz. When highly bright ultraviolet rays such as the excimer layer are radiated upon the surface of a polymer resin, the ablative photodecompotion (APD) process occurs. The radiated spot is scattered and decomposed due to plasma emission and impact noises, which is called laser ablation process of polymer resin.

A typical YAG laser is used for laser processing such as drilling, but it tends to leave rough edge surfaces. An infrared CO2 laser causes an undesirable crater formed on the circumference of each hole.

The type of laser processing of interest herein is the so-called laser thermal processing, which is carried out by transforming light energy into thermal energy. The resultant shape is, however, susceptible to collapse and in turn, makes a precise processing difficult. In contrast, the excimer laser-based ablation process performs a sublimation etching by means of the photochemical reaction that breaks the covalent binding of carbon atoms. This enables a fairly precise processing free from collapse.

The ablation process is a method for performing sublimation process by use of laser without requiring a liquid phase conditioning.

Particularly, in the ink jet technologies, the practical use of laser ablation process has remarkably been developed.

Further, conventional laser processes using an excimer laser have taught the followings: the oscillating pulses of radiated laser have the frequency of approximately several tens of nanoseconds per pulse in case of the excimer laser, i.e., the aforesaid ultraviolet laser, while the ultraviolet harmonic oscillation of YAG laser has the frequency of approximately 100 picoseconds to several nano seconds. However, only part of the light energy of the laser beams radiated on a workpiece is used for breaking the covalent bond between atoms.

The existence of light energy which is not used for breaking the covalent binding causes a premature scattering of portions of the workpiece under the laser processing before they are completely decomposed. Thus, a by-product is left on the circumference of the processed portion.

In addition, the light energy that is not used in breaking the covalent bond tends to be converted into thermal energy. The energy density of excimer laser reaches a 100-megawatt level at the maximum in view of oscillating pulses. Therefore, it is difficult to process metal, ceramics, and minerals (such as silicon) having a high heat transfer ratio, as with quartz and glass having a low light absorption rate. Organic resin materials can generally be processed by use of a sublimating ablation.

These undesirable effects that occur when using an excimer laser have led to various alternative processing techniques for preventing adverse effects to a recording head.

Due to the thermal energy converted from light energy, a workpiece may also be subject to expansion while being processed or the workpiece may be melted down at least partially. Therefore, it is necessary to use a material having a high glass transition temperature or a material having a lower processing pitch.

At least part of the above background technologies are disclosed by Korean Patent Application Publication No. 2001-0007596 (published January 26, 2001) entitled "Laser processing method, method for manufacturing ink jet recording head using such method of manufacture, and ink jet recording head manufactured by such method of manufacture."

### SUMMARY OF THE INVENTION

In accordance with some embodiments, the present disclosure provides a laser processing apparatus including a laser generator, a laser amplifier, a chromatic dispersion tuner and an optical focusing unit. The laser generator is configured to generate ultrashort pulse laser having chirp characteristics by simultaneously generating a plurality of wavelengths. The laser amplifier is configured to amplify the laser generated by the laser generator. The chromatic dispersion tuner is configured to adjust chirp and pulse width of the laser output from the laser amplifier. And the optical focusing unit is configured to irradiate a workpiece with the laser after adjusting the depth of focus of the laser with the chirp and the pulse width adjusted by the chromatic dispersion tuner.

The present disclosure in accordance with some embodiments further includes a pulse picker configured to select the number and an interval of pulses of the laser coming out of the laser generator and the chromatic dispersion tuner, under the control of a controller.

The laser generator is configured to simultaneously generate the plurality of wavelengths by using a single-mode optical fiber and to generate the ultrashort pulse laser having a pulse width of a picosecond level by way of mode-locking to set values which are phase differences between the plurality of wavelengths.

The chromatic dispersion tuner includes at least one of a transmissive chromatic dispersion medium and an optical grating device.

The chromatic dispersion tuner is configured to adjust the time for each wavelength of the laser to reach an object.

The optical focusing unit is an optical system including a chromatic dispersion medium.

The optical focusing unit is configured to adjust the depth of focus of the laser by adjusting a chromatic aberration or an optical numerical aperture of the laser.

### BRIEF DESCRIPTION OF THE DRAWINGS

FIG. 1 is a block diagram of a laser processing apparatus according to an embodiment of the present disclosure.
FIG. 2 is a diagram for describing the adjustment state of the depth of focus in accordance with a chromatic aberration in a laser processing apparatus according to an embodiment of the present disclosure.
FIG. 3 is a diagram for describing a change in the depth of focus in accordance with the magnitude of the laser beam in a laser processing apparatus according to an embodiment of the present disclosure.

**REFERENCE NUMERALS**

| | | | |
|---|---|---|---|
| 10: | Laser Generator | 20: | Laser Amplifier |
| 30: | Optical Focusing Unit | 34, 38: | Depth of Focus |
| 35, 36: | Expanded Diameter | 37: | Optical System |
| 39: | Focus Stroke | 40: | Chromatic Dispersion Tuner |
| 50: | Pulse Picker | 60: | Controller |
| 70: | Workpiece | 80: | Servo Stage |

### DETAILED DESCRIPTION OF THE INVENTION

The present disclosure provides a laser processing apparatus which adjusts the focal positions and focal timing of respective wavelengths of an ultrashort pulse laser having chirp characteristics through chromatic aberration and chromatic dispersion to effectuate the desired long depth of focus, and which enables adjustments of moving direction and speed of the focus in accordance with the characteristics of the processing stage in order to obtain shapes with a high aspect ratio.

Hereinafter with reference to the accompanying drawings, a laser processing apparatus according to an embodiment of the present disclosure will be described. For the purpose of clarity and illustration, line thicknesses and component sizes may be depicted with exaggeration.

The terms to be described below are defined based on functions in the present disclosure and they are subject to change depending on a user's or operator's intention or practice. Therefore, interpretation of these terms should be made based on the content throughout the specification in general.

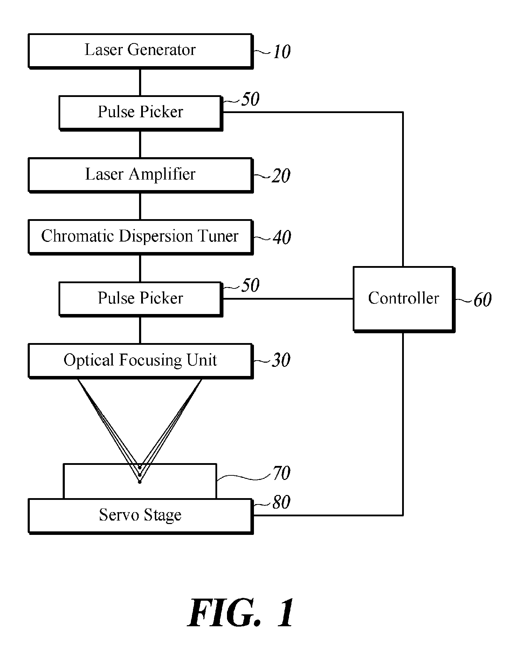

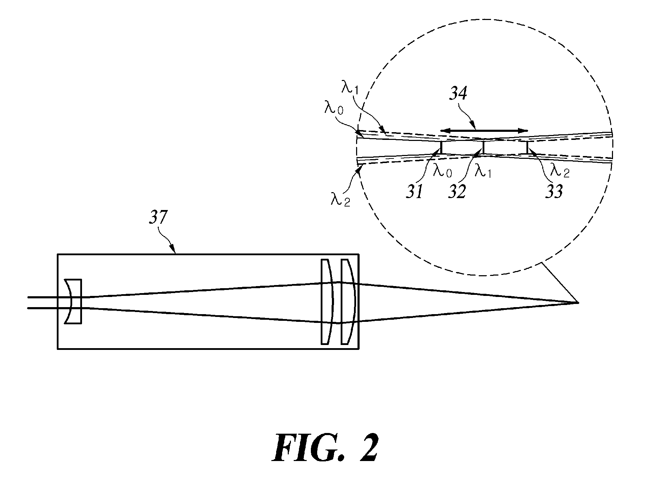

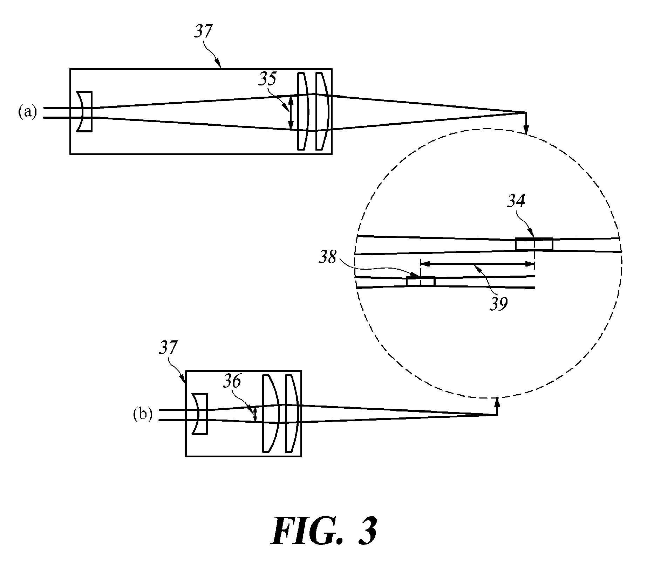

FIG. 1 is a block diagram showing a laser processing apparatus according to an embodiment of the present disclosure, FIG. 2 describes the adjustment state of the depth of focus in accordance with a chromatic aberration in a laser processing apparatus according to an embodiment of the present disclosure, and FIG. 3 describes a change in the depth of focus in accordance with the magnitude of the laser beam in a laser processing apparatus according to an embodiment of the present disclosure.

As shown in FIG. 1, the laser processing apparatus according to an embodiment of the present disclosure includes a laser generator 10, a chromatic dispersion tuner 40, an optical focusing unit 30, a laser amplifier 20, a pulse picker 50 and a controller 60.

The laser generator 10 generates ultrashort pulse laser having the chirp characteristics as a result of simultaneous oscillation of a plurality of wavelengths.

The laser generator 10 utilizes a single-mode optical fiber for simultaneously oscillating the plurality of wavelengths through a relatively long cavity length and generates the ultrashort pulse laser having a subpicosecond pulse width by way of mode-locking to set values which are phase differences between the plurality of the wavelengths.

In addition, generation of the chirped laser may be achieved by the application of stretching or over-compression on the ultrashort pulse laser.

The laser chirp refers to a state where the multiple wavelengths present in the pulse width of the laser are arranged in decreasing wavelength order (up-chirp) or in increasing wavelength order (down-chirp). Therefore, when a laser having the chirp characteristics is incident on an object, the wavelengths have different arrival times depending on their order of arrangement.

The laser amplifier 20 utilizes an optical fiber for amplifying the laser generated by the laser generator 10.

The chromatic dispersion tuner 40 adjusts chirp and pulse width of the laser coming out of the laser amplifier 10.

In this case, the chromatic dispersion tuner 40 may include a transmissive chromatic dispersion medium or an optical grating device.

Upon passing through the transmissive chromatic dispersion medium or the optical grating device, the laser with the chirp characteristics coming out of the laser amplifier 10 displays a focal timing difference for each of the wavelengths due to a chromatic dispersion phenomenon in the medium or the device.

Therefore, the order of irradiation of the plurality of wavelengths present in the laser pulse width becomes adjustable by adjusting the chromatic dispersion using the chromatic dispersion tuner 40 or by adjusting the reflection and the travel path of light through the optical grating device. The adjustment of the time interval between the wavelengths can in turn adjust the chirp and the pulse width.

In turn, the chromatic dispersion tuner 40 can adjust the time for each wavelength of the laser to reach an object.

The optical focusing unit 30 concentrates the laser with the chirp and the pulse width adjusted by the chromatic dispersion tuner 40 and irradiates the concentrated laser on a workpiece 70.

At this time, given that the optical focusing unit 30 is employed in an optical system 37 as shown in FIG. 2 as including a chromatic dispersion medium, the multiple wavelengths have their focuses concentrated at different points due to the chromatic aberration of the optical system 37 when the laser with the chirp characteristics travels through the chromatic dispersion medium.

In particular, focal points 31, 32 and 33 formed by respective wavelengths λ₀, λ₁ and λ₂ are located at different spots with temporal intervals therebetween. In addition, the energy at each focal point 31, 32 or 33 is the sum of energy of the wavelengths λ₀, λ₁ and λ₂. Other wavelengths are distributed on the periphery of such focal points and therefore exert insignificant effect on the processing area.

Therefore, the laser having the chirp characteristics according to the present disclosure forms focusing spots which establish a depth of focus 34 with focal positions which vary by wavelength. Moreover, the focusing spots are formed at different times.

Further, as shown in FIG. 3, the depths of focus 34, 38 of the laser can be adjusted by controlling the beam size of the laser or the chromatic aberration of the lenses employed in the optical focusing unit 30.

When the optical system 37 replaces a laser expanded diameter 35 shown in FIG. 3 at (a) with a laser expanded diameter 36 shown at (b), depth of focus 34 formed by the optical system 37 as at (a) advances by a focal travel distance or stroke 39 to the depth of focus 38 by the optical system 37 at (b).

In this case, the depths of focus 34, 38 can be adjusted by selectively controlling the chromatic aberration of the lens which is used in the optical system 37.

Further, adjustment of the depths of focus 34, 38 can also be achieved by controlling the laser expanded diameters 35, 36 formed inside the optical system 37. In other words, the stroke 39 of the depths of focus 34, 38 can be adjusted by changing the laser numerical aperture.

By adjusting the focal positions and focal timing of the respective wavelengths of the laser having chirp characteristics through the chromatic aberration and chromatic dispersion, the present disclosure achieves a desired long depth of focus. In addition, the adjustment of the moving direction and speed of the focal position in accordance with the processing specifications yields shapes with a high aspect ratio.

Supposing that the ultra short pulse laser in some embodiments has the line width of 1060 nm∼1070 nm and the pulse width of 250 fs, the chromatic dispersion can generate up-chirp wavelengths or down-chirp wavelengths having the pulse width of 1 ns and the chromatic aberration can generate 100 µm difference in focal positions between the 1060 nm-wavelength component and the 1070 nm-wavelength component. The chromatic dispersion and the chromatic aberration collectively help to constitute an optical system wherein a focal position moves 100 µm in 1 ns. The moving direction of the focal position can be determined depending on whether the wavelengths are arranged up chirp or down chirp. In this way, the stroke, the moving direction of the focal position and the focal timing become controllable, which enables effective processing of elongated holes as long as 100 µm. It should be noted that the above embodiments are merely an example and the disclosure is not limited hereto.

The pulse picker 50 enables the laser to be selectively irradiated on the workpiece 70 by selecting the number and interval of pulses of the laser coming out of the laser generator 10 and the chromatic dispersion tuner 40.

The controller 60 moves a servo stage 80 for placing the workpiece 70 on so that the workpiece 70 can be freely repositioned relative to the laser and then controls the pulse picker 50 to adjust the laser radiation time for shaping the workpiece 70.

As described above, the present disclosure provides a laser processing apparatus which adjusts the focal positions and focal timing of respective wavelengths of an ultrashort pulse laser having chirp characteristics through chromatic aberration and chromatic dispersion to effectuate the desired long depth of focus, and which enables adjustments of the moving direction and speed of the focal position in accordance with the processing specifications in order to obtain shapes with a high aspect ratio and to preclude by-product wastes during laser processing.

Although the present disclosure has been described with reference to an embodiment shown in the drawings for illustrative purposes, those skilled in the art will appreciate that various modifications, additions and substitutions are possible, without departing from the various characteristics of the disclosure.

Therefore, the technical scope of the disclosure should be defined by the following claims.

## Claims

1. A laser processing apparatus, comprising:
a laser generator configured to generate an ultrashort pulse laser having chirp characteristics by simultaneously generating a plurality of wavelengths;
a laser amplifier configured to amplify the laser generated by the laser generator;
a chromatic dispersion tuner configured to adjust chirp and pulse width of the laser output from the laser amplifier; and
an optical focusing unit configured to irradiate a workpiece with the laser after adjusting the depth of focus of the laser with the chirp and the pulse width adjusted by the chromatic dispersion tuner.

2. The laser processing apparatus of claim 1, wherein the laser generator is configured to simultaneously generate the plurality of wavelengths by using a single-mode optical fiber and to generate the ultrashort pulse laser having a pulse width of a picosecond level by way of mode-locking to set values which are phase differences between the plurality of wavelengths.

3. The laser processing apparatus of claim 1, wherein the chromatic dispersion tuner comprises at least one of:
a transmissive chromatic dispersion medium; and
an optical grating device.

4. The laser processing apparatus of claim 1, wherein the chromatic dispersion tuner is configured to adjust the time for each wavelength of the laser to reach an object.

5. The laser processing apparatus of claim 1, wherein the optical focusing unit is an optical system including a chromatic dispersion medium.

6. The laser processing apparatus of claim 1, wherein the optical focusing unit is configured to adjust the depth of focus of the laser by adjusting a chromatic aberration or an optical numerical aperture of the laser.

7. The laser processing apparatus of claim 1, further comprising a pulse picker configured to select the number and an interval of pulses of the laser coming out of the laser generator and the chromatic dispersion tuner, under the control of a controller.
